# NEW EUROPEAN PATENT SPECIFICATION

(11) **EP 0 154 197 B2**
(45) Date of publication and mention of the opposition decision: **02.01.1997**
(45) Mention of the grant of the patent: 30.11.1988
(21) Application number: 85101380.5
(22) Date of filing: 08.02.1985
(51) Int. Cl.: D01F 6/30, C08L 23/08

(54) **Fine denier fibers of olefin polymers**
Polyolefinfasern mit feinem Denier
Fibres à denier fin en polyoléfine

(30) Priority: 17.02.1984 US 581480; 16.11.1984 US 672009
(43) Date of publication of application: 11.09.1985
(73) Proprietor: THE DOW CHEMICAL COMPANY, Midland Michigan 48640-1967 (US)
(72) Inventor: Sawyer, Lawrence H., Lake Jackson Texas 77566 (US); Knight, George W., Lake Jackson Texas 77566 (US)
(74) Representative: Casalonga, Axel

(56) References cited:
- EP-A- 0 016 707
- EP-A- 0 048 227
- EP-A- 0 102 857
- EP-A- 0 107 382
- GB-A- 2 121 423
- US-A- 3 276 944
- US-A- 3 885 014
- US-A- 4 007 247
- RESEARCH DISCLOSURE, no. 230, June 1983, pages 205-206, no. 23025, Kenneth Mason Publications Ltd., Emsworth, US; J. P. CLARK: "Linear low-density polyethylene membranes"
- B. Dolezel:"Die Beständigkeit von Kunststoffen und Gummi" 1978, Carl Hanser Verlag, Munich, Vienna, pp. 313 - 315
- Proceedings IUPAC, 28th Macromol. Symposium, July 12-16, 1982, p. 221
- Encycl- of Polymer Sci. and Eng., 2nd edition, 1986, vol. 6, pp. 433 - 435, 441

## Description

There are basically two polymerization techniques for preparing high molecular weight olefin polymers and copolymers. The oldest commercial technique involves high pressure, high temperature, and the use of a free radical initiator, such as peroxide, to give polymers generally known as low density polyethylene (LDPE). They are also known as high pressure polyethylene (HPPE) and as ICI-type polyethylenes. These LDPE polymers contain branched chains of polymerized monomer pendant from the main polymer "backbone" and generally have densities in the range of 0.910-0.935 g/cm³.

The other commercial technique involves coordination catalysts of the "Ziegler" or "Phillips" type and includes variations of the Ziegler type, such as the Natta type. These catalyst may be used at very high pressures, but generally are used at very low or intermediate pressures. The products made by these coordination catalysts are generally known as "linear" polymers because of the substantial absence of branched chains of polymerized monomer pendant from the main polymer "backbone". They are also generally known as high density polyethylene (HDPE). Such linear polyethylene (HDPE) ordinarily has a density in the range of 0.941 to 0.965 g/cm³.

It is modified versions of these "linear" polymers to which the present invention pertains. In particular, it relates to "linear" ethylene polymers wherein ethylene has been polymerized along with minor amounts of alpha, beta-ethylenically unsaturated alkenes having from 3 to 12 carbons per alkene molecule, preferably 4 to 8. The amount of alkene comonomer is generally sufficient to cause the density of the polymer to be about same density range as LDPE, due to the alkyl sidechains on the polymer. Although these polymers remain in the "linear" classification, they are conveniently referred to as "linear low density polyethylene" (LLDPE). They retain much of the strength, crystallinity, and extensibility normally found in HDPE homopolymers while also exhibiting characteristics of LDPE such as toughness and low modulus.

The present invention also pertains to fine denier fibres and multi-filaments of ethylene copolymers. U.S. 4,181,762, U.S. 4,258,097, and U.S. 4,365,220 are representative of the most relevant fiber art while U.S. 4,076,698 discloses methods of producing LLDPE polymers and extrusion of a monofilament. Other references relating to fibers and filaments, including those of man-made thermoplastics, are, for example:
(a) *Encyclopedia of Polymer Science and Technology,* Interscience, New York, Vol. 6 (1967) pp 505-555 and Vol. 9 (1968) pp 403-440;
(b) *Man-Made Fiber and Textile Dictionary,* published by Celanese Corporation;
(c) *Fundamentals of Fibre Formation - The Science of Fibre Spinning and Drawing,* by Andrzij Ziabicki, published by John Wiley & Sons, London/New York, 1976;
(d) *Man Made Fibres,* by R. W. Moncrieff, published by John Wiley & Sons, London/New York, 1975;
(e) *Kirk-Othmer Encyclopedia of Chemical Technology,* Vol. 16 for "Olefin Fibers", published by John Wiley & Sons, New York, 1981, 3rd Edition.

The present invention pertains to a homofilament consisting of a fiber, a filament or multi-filament being less than about 1.7 tex (=about 15 denier) and comprised of linear low density copolymers of ethylene with an alpha-olefin of C₃ to C₁₂ whereby the alpha-olefin is one or more alpha-olefins comprising 1-octene.

This invention will be applicable in nonwoven, woven, knitted and composite fibrous structures. Examples may be diaper innerfacing, sanitary products, medical products, sheeting, drapes, disposable clothing, protective clothing, outdoor fabrics, industrial fabrics, netting, bagging, membranes, filters, rope, cordage and other fibrous products. The LLDPE fibers and multi-filaments exhibit improved properties such as softness, lower heat distortion temperature. wider heat seal range, good drawdown, environmental stress crack resistance, good melt strength, good tensiles, high elastic recovery, good stability to ionizing radiation, and resistance to fibrillation as compared to high density polyethylene (HDPE), low density polyethylene (LDPE), polypropylene (PP), polyesters, and nylons. Although certain selected properties may be obtained in filaments and fibers from these latter resins, many other properties are lost, or absent. Thus the invention provides a unique combination of property advantages. These property improvements in multi-filament and fine denier fiber form may be further developed and altered by melt, solution or composite fiber spinning processes. The resin and fiber properties are ideally suited to melt forming processes of the spun bonded, melt blown and high speed spin-draw type.

In conformity with commonly accepted terminology of the fiber and filament industry, the following definitions apply to the terms used herein:
. . . A "monofilament" (a.k.a. monofil) refers to an extruded individual strand of denier greater than 15 (1.7 tex), usually greater than 30 (3.3 tex);
. . . A "fine denier fiber of filament" refers to an extruded strand of denier less than about 15 (1.7 tex);
. . . A "multi-filament" (a.k.a. multifill) refers to simultaneously extruded fine denier filaments formed as a bundle of fibers, generally containing at least 3, preferably at least about 15-100 fibers and can be several hundred or several thousand;
... "Staple fibers" refer to fine denier strands which have been formed at, or cut to, staple lengths of generally 1 to 8 inches (2.5 to 40 cm);
. . . An "extruded strand" refers to an extrudate formed by passing polymer through a forming-orifice, such as a die.

While virtually any thermoplastic polymer can be extruded as a coarse strand or monofilament many, such as polyethylene and some ethylene copolymers, have not generally been found to be suitable for the making of fine denier fibers or multi-filaments. Practitioners are aware that it is easier to make a coarse monofilament yarn of 15 denier than to make a multi-filament yarn of 15 denier. It is also recognized that he mechanical and thermal processing conditions for a bundle of filaments, whether in spinning staple fibers or in multi-filament yarns, are very different from those in spinning monofilaments. The fact that a given polymer can be extruded as a monofilament, does not necessarily herald its use in fine denier or multi-filament extrudates.

This invention utilizes a particular class of resin for conversion into multi-filament and fine denier fiber where the fiber geometry exhibits improvements in specific properties or combination of properties that are developed through the resin and processing characteristics. The resins, classified as linear low density polyethylene copolymers (LLDPE), yield multifilaments and fine denier fibers with improved physical properties compared to fibrous products from polypropylene (PP), low density polyethylene (LDPE), and high density polyethylene (HDPE). LDPE and HDPE are said to form useful monofilaments, but are generally regarded as ill-suited for multi-filaments or fine denier fibers. LLDPE multi-filaments and fine denier fibers are found to possess superior tactile properties such as softness, process advantages, and use characteristics that can be selectively enhanced by the resin nature.

For a given molecular weight resin, as determined from melt index LLDPE filament formation is less susceptible to flow instabilities such as melt fracture and excessive die swell then processes with HDPE or PP. Under these conditions the LLDPE resins maintain better melt strength while allowing enhanced drawdown and formation of fine denier multi-filaments compared to LDPE, HDPE and PP. LLDPE filaments of this invention readily draw at lower temperatures to high draw ratios while exhibiting superior resistance to fibrillation. These LLDPE filaments and fibers develop comparable tenacities to PP and HDPE with improved toughness (work to rupture) and environmental stress crack resistance. LLDPE thermal characteristics impart a lower heat distortion temperature and wide heat seal range to filaments and fibers while resulting in high strength heat seals as compared to HDPE and PP filaments. The resin thermal response allows partial fusion of the fibrous structure during bonding or sealing while the fiber geometry is retained and fiber performance properties, such as hand, persist. Improved stability to ionizing radiation make LLDPE filaments and fibers more suitable for use in environments or applications subject to UV, beta or gamma irradiation than PP fibers.

LLDPE multi-filaments and fine denier fibers are especially suited to nonwoven applications such as disposable diaper innerliners now made primarily of polyester staple webs. PP fiber webs are gaining acceptance and replacing polyester because of softness and price advantages. LLDPE fibers of the present invention are much softer than PP fibers while resin prices are similar. LLDPE products offer additional advantages over PP. Because of greater softness, LLDPE fibers do not need to be as fine as PP. This offers process advantages since very fine denier filaments (less than 2 denier) are more difficult to make. However the LLDPE fibers of this invention have been produced as ultra fine denier and multi-filaments with individual filaments being sub-denier (less than 1 denier). The thermal bonding characteristics of LLDPE allows these fibers to thermally bond directly to a diaper backsheet of ordinary polyethylene film, whereas PP and polyester are usually glued. Additional advantages may be realized due to the LLDPE processing and drawdown characteristics.

The LLDPE polymers for use in the present invention are those which contain, as copolymerized monomer units along the polymer chain, a C₃-C₁₂ alpha-olefin, especially a C₃-C₁₀ alpha-olefin, most especially a C₄-C₈ alpha-olefin; octene-1 is a particularly preferred embodiment, therefore the alpha-olefin should comprise 1-octene. Mixtures of said alpha-olefin comonomers are also within the purview of the present invention, such as 1-butene/1-octene/ 1-hexene or 1-butene/1-octene. The amount of the comonomer in the polymer chain which will provide a density of 0.86 percent to 0.94, especially 0.90 to 0.94, will depend on the particular comonomer (or mixture of comonomers) copolymerized with the ethylene. Usually about 1 percent to about 30 percent by weight of the comonomer will assure production of a density in the desired range. Generally speaking, more of a small alpha-olefin (such as propylene) is needed on a molar basis to produce a given change in density, than of a large alpha-olefin (such as dodecene).

The melt index (a.k.a. melt flow value) of the LLDPE polymer, as measured according to ASTM D-1238 (E), is preferably in the range of 0.01-400 g/10 min, more preferably in the range of 0.1 to 300 g/10 min, most preferably in the range of 6 to 300 g/10 min.

The ethylene/alpha-olefin copolymers of the present invention, LLDPE, are fabricated into multifilament and fine denier fiber form by melt, solution, or composite spinning processes. Melt type spinning processes are the preferred route for fabrication. Fine denier fibers may be formed directlv by melt blown and spray spun type processing or cut from continuous filament products. Fine denier filaments may be produced and collected as packages by conventional melt spinning processes with or without inline or after-drawing. Fine denier filaments may also be produced and collected in nonwoven web form by spun bonded processes. Fine denier filaments and fibers can then be processed further bv existing fiber handling processes that include carding, nonwoven fabric production, calendering, staple yarn formation, continuous yarn texturing and forming, knitting and weaving. The processes of filament and fiber formation as well as subsequent processing like fabric formation benefit from the processability of the fibers of the present invention and yield a product that exhibits beneficial properties of the ethylene/alpha-olefin LLDPE resin such as softness. In the present invention, the preferred spinning temperature is about 125°C to 350°C, most preferably 190°C to 300°C. The preferred spinning pressure is in the range of 0.4-210 MPa (50 to 30,000 psi) most preferably 1.4-55 MPa (200 to 8,000 psi). The melting range of LLDPE is largely dependent on the particular alpha-olefin comonomers and the amount used.

The present invention provides fine denier filaments, fibers and fibrous products such as fabric with properties or combinations of properties not readily available in other fiber forming materials. The invention shows distinct improvement of specific properties over polypropylene and polyester fibres, as well as benefits over high density polyethylene, low density polyethylene and nylon type fibers. Among other advantages, the present invention yields softer fibrous products and has lower thermal bonding characteristics than either polypropylene or polyester. This invention is more stable to ionizing radiation and more resistant to fibrillation than polypropylene and it is more resistant to degradative chemical environments than polyester and nylon.

The following examples illustrate certain embodiments of the present invention.

### Example 1

An ethylene/octene copolymer with 6.0 Ml and 0.919 g/cm³ density was melt extruded at 230°C into continuous multi-filament form. A 24 filament bundle was produced with 60-80X spin draw and take-up at 1000-1750 m/min without additional draw. The 14-9 denier filaments had good hand and would readily draw 3-4X without loss of hand to give 2-3 denier filaments.

### Example 2

Staple fiber cut from 14 denier multi-filaments as in Example 1 above, exhibited exceptional softness, having a comparable hand to 1.5 denier PP fiber. Staple fiber was processed on a card, a Garnett, and a Rando-Webber to form nonwoven webs. The fiber ran well and light weight, soft webs were collected.

### Example 3

Samples of LLDPE staple fine denier fibers were blended with cotton and polyester fibers and the blends were exposed to various heat bonding regimes. Bonding occurred rapidly and the LLDPE fibers could be compressed completely to form a localized film, or fused just to the point of allowing point bonds at fiber junctions. Good, strong bonding resulted in all cases with the point bond samples exhibiting superior tactile properties.

### Example 4

Samples of unstabilized LLDPE (14 denier) and HDPE (25 denier) filaments were exposed to 2 Mrad of gamma radiation of 0.2 Mrad per hour from a Co⁶⁰ source. The LLDPE showed no loss of tensile properties while the HDPE sample exhibited a decrease in both ultimate tensile strength (tenacity) and elongation.

| | Before exposure | | After 2 Mrad exposure | |
|---|---|---|---|---|
| | Tenacity (g/den) | Elongation % | Tenacity (g/den) | Elongation % |
| LLDPE filaments | 1.62 (1.43)* | 950 | 1.64 (1.45)* | 950 |
| HDPE filaments | 1.42 (1.25)* | 670 | 1.27 (1.12)* | 510 |

| | | | | |
|---|---|---|---|---|
| * cN/dtex | | | | |

### Example 5

An ethylene/octene polymer with 50.0 Ml and 0.926 g/cm³ density (LLDPE) was melt extruded at 180°C into continuous multi-filament form. The filament bundle was attenuated by high speed air to give a final fiber diameter of 8 µm. These ultra fine denier or sub-denier fibers, 0.4 denier (0.044 tex) per filament in the bundle, can be handled in the same ways as fine denier fibers.

### Example 6

A low density polyethylene, LDPE, with 6.75 Ml, 0.919 g/cm³ density was used in an attempt to produce a multi-filament bundle. The LDPE was melt extruded through a 34 hole spinnerette. The resulting filaments were of poor uniformity and take up rates were limited to a slow rate of 186 m/min by filament breakage. The minimum denier of the individual LDPE filaments produced during the attempt at multi-filament formation was 65 denier (7.2 tex). Thus the LDPE was not suitable for making fine denier filaments or multi-filaments.

## Claims

1. A homofilament consisting of a fiber, a filament or multi-filament being less than about 1.7 tex (about 15 d.p.f.) and comprised of a linear low density (=LLD) copolymer of ethylene with a C₃ to C₁₂ alpha-olefin characterized in that
the alpha-olefin is one or more alpha-olefins comprising 1-octene.

2. Homofilament of claim 1 characterized in that the alpha-olefin is selected from the group consisting of 1-octene, 1-octene/ 1-butene and 1-octene/1-hexene/1-butene.

3. Homofilament of claim 2 characterized in that the alpha-olefin is 1-octene.

4. Homofilament according to any of claims 1-3 characterized in that the alpha-olefin is present in an amount of 1 to 30 weight percent of the copolymer.

5. Homofilament according to any of claims 1-4 characterized in that the copolymer has a density in the range of 0.86 to 0.94 g/cm³ and a melt flow value of 0.01 to 400 g/10 min. as measured by the method of ASTM D-1238(E).

6. Homofilament according to any of claims 1-5 in the form of a filament-bundle, a non-woven web or a fabric.

7. Homofilament of any of claims 1-6 in blended form with other forms of fibers.

## Patentansprüche

1. Homofilament, bestehend aus einer Faser, einem Faden oder Multifilament mit weniger als 1,7 tex (ungefähr 15 d.p.f. [d.p.f. = Denier pro Faden]), bestehend aus einem linearen Copolymeren von Ethylen mit einem C₃- bis C₁₂ alpha-Olefin, dadurch gekennzeichnet, daß das alpha-Olefin eines oder mehrere alpha-Olefine ist, welches 1-Octen umfaßt.

2. Homofilament nach Anspruch 1, dadurch gekennzeichnet, daß das alpha-Olefin aus der aus 1-Octen, 1-Octen/1-Buten und 1-Octen/-1-Hexen/1-Buten bestehenden Gruppe ausgewählt ist.

3. Homofilament nach Anspruch 2, dadurch gekennzeichnet, daß das alpha-Olefin 1-Octen ist.

4. Homofilament nach einem der Ansprüche 1 - 3, dadurch gekennzeichnet, daß das alpha-Olefin in einer Menge von 1 bis 30 Gew.-% des Copolymeren vorhanden ist.

5. Homofilament nach einem der Ansprüche 1 - 4, dadurch gekennzeichnet, daß das Copolymere eine Dichte im Bereich von 0,86 bis 0,94 g/cm³ und einen Schmelzflußwert von 0,01 bis 400 g/10 min, gemessen nach der Methode ASTM D-1238 (E), aufweist.

6. Homofilament nach einem der Ansprüche 1 - 5, in Form eines Faserbündels, einer ungewebten Bahn oder eines Textilmaterials.

7. Homofilament nach einem der Ansprüche 1 - 6 in gemischter Form mit anderen Formen von Fasern.

## Revendications

1. Homofilament consistant en une fibre, un filament ou multi-filament de moins d'environ 1,7 tex (environ 15 d.p.f.) et constitué d'un copolymère linéaire basse densité (=LLD) d'éthylène avec une alpha-oléfine en C₃-C₁₂, caractérisé en ce que l'alpha-oléfine représente une ou plusieurs alpha-oléfines comprenant le 1-octène.

2. Homofilament conforme à la revendication 1, caractérisé en ce que l'alpha-oléfine est choisie dans l'ensemble formé par les 1-octène, 1-octène/1-butène, 1-octène/1-hexène/1-butène.

3. Homofilament conforme à la revendication 2, caractérisé en ce que l'alpha-oléfine est le 1-octène.

4. Homofilament conforme à l'une quelconque des revendications 1 à 3, caractérisé en ce que l'alpha-oléfine est présente en une quantité de 1 à 30% en poids du copolymère.

5. Homofilament conforme à l'une quelconque des revendications 1 à 4, caractérisé en ce que le copolymère présente une densité située dans l'intervalle allant de 0,86 à 0,94 g/cm³ et un indice de fluidité à chaud de 0,01 à 400 g/10 min., tel que mesuré par le procédé de la norme ASTM D1238(E).

6. Homofilament conforme à l'une quelconque des revendications 1 à 5, sous forme d'un faisceau de filaments, d'une bande de nontissé, ou d'un tissu.

7. Homofilament conforme à l'une quelconque des revendications 1 à 6, sous la forme d'un mélange avec d'autres formes de fibres.
